# EUROPÄISCHE PATENTSCHRIFT

(11) **EP 1 354 084 B1**
(45) Veröffentlichungstag und Bekanntmachung des Hinweises auf die Patenterteilung: **13.08.2008**
(21) Anmeldenummer: 02710011.4
(22) Anmeldetag: 16.01.2002
(51) Int. Cl.: D01F 8/04, D01F 8/14, D01F 13/04, D04H 3/10, D04H 1/46

(54) **VERFAHREN ZUR HERSTELLUNG VON MONOKOMPONENTEN-MIKROFILAMENTEN**
METHOD FOR PRODUCING MONOCOMPONENT-MICROFILAMENTS
PROCEDE DE PRODUCTION DE MICROFILAMENTS A UN COMPOSANT

(30) Priorität: 19.01.2001 DE 10117970
(43) Veröffentlichungstag der Anmeldung: 22.10.2003
(73) Patentinhaber: Carl Freudenberg KG, 69469 Weinheim (DE)
(72) Erfinder: REIBEL, Denis, F-67850 Herrlisheim (FR); GROTEN, Robert, F-68280 Sundhofen (FR); RIBOULET, Georges, F-68000 Colmar (FR)
(86) Internationale Anmeldenummer: PCT/EP2002/000390
(87) Internationale Veröffentlichungsnummer: WO 2002/057524

(56) Entgegenhaltungen:
- EP-A- 0 618 316
- PATENT ABSTRACTS OF JAPAN vol. 018, no. 656 (C-1286), 13. Dezember 1994 (1994-12-13) & JP 06 256559 A (MITSUBISHI KASEI CORP), 13. September 1994 (1994-09-13)
- PATENT ABSTRACTS OF JAPAN vol. 1995, no. 07, 31. August 1995 (1995-08-31) & JP 07 102422 A (MITSUBISHI RAYON CO LTD), 18. April 1995 (1995-04-18)
- DATABASE WPI Section Ch, Week 199801 Derwent Publications Ltd., London, GB; Class A23, AN 1998-004501 XP002199679 & JP 09 273029 A (TORAY IND INC), 21. Oktober 1997 (1997-10-21)

## Beschreibung

Die vorliegende Erfindung befasst sich mit einem Verfahren zur Herstellung von Monokomponenten-Mikrofilamenten aus von im Schmelzspinnverfahren erzeugten Mehrkomponenten-Filamenten, insbesondere aus Bikomponenten-Filamenten.

Es ist bekannt, Mikrofilamente dadurch herzustellen, indem Mehrkomponenten-Filamente mechanisch oder durch Lösungsmittel aufgesplittet werden. Die so entstehenden Mikrofilamente sind um ein Mehrfaches dünner als die unaufgesplitteten Filamente. Dabei können die Filamente so aufgesplittet werden, dass ihre einzelnen Komponenten bestehen bleiben oder aber eine der Komponenten wird im Lösungsmittelsplittverfahren entfernt, so dass anschließend ein Monokomponenten-Mikrofilament vorhanden ist. Für das mechanische Aufsplitten der Filamente sind verschiedene Verfahren bekannt, darunter auch das Aufsplitten durch einen starken Wasserstrahl. Damit dieses möglich ist, werden die splittbaren Filamente aus inkompatiblen Komponenten gebildet. Häufig werden hier Polyester und Polyamide eingesetzt. Die Inkompatibilität der verwendeten Polymere gestaltet die nachfolgenden Veredelungen der Mikrofilamente und der daraus hergestellten Stoffe jedoch schwierig. So ist beispielsweise das Färbeverhalten der einzelnen Komponenten sehr unterschiediich und das könnte sich beim fertigen Produkt störend bemerkbar machen. Dieses fällt weg bei Monokomponenten-Mikrofilamenten, die im Lösungsmittelsplittverfahren hergestellt wurden und bei denen eine der Komponenten herausgelöst wurde.

### Stand der Technik

Durch die japanische Patentanmeldung 55076110 A ist es bekannt, einen Polyester aus Polyethylenteraphtalat der mit einem Polyamid kombiniert ist, als Splittkomponente zu benutzen. Der Polyester wird mit dem Polyamid zu einem Filament ersponnen und das entstehende Garn wird mit einem wässrigen Alkali behandelt um den Polyester herauszulösen. Es entstehen sodann Mikrofilamente aus Polyamid.

Die EP 0 618 316 A1 gibt eine andere Möglichkeit der Herstellung von Mikrofasern an, bei dem zwei verschiedene Polymere benutzt werden, von denen eines ein wasserunlösliches Polyolefin und das andere ein wasserlösliches Polymer ist. Letzteres ist ein Polyvinylalkohol. Durch eine Behandlung der Mikrofilamente oder des daraus hergestellten Materials im Wasser wird das wasserlösliche Polymer herausgelöst.

In vergleichbarer Weise wird bei der EP 0 618 317 A1 verfahren, bei der als wasserunlösliches Polymer ein Polyester-Polyamid oder Copolymere daraus und als wasserlösliches Polymer eine difunktionale Dicarboxylsäure benutzt wird.

In der europäischen Patentanmeldung EP 0 498 672 A2 werden Mikrofasern im Melt-Blown-Verfahren hergestellt, bei denen die Komponenten des zu splittenden Filaments aus thermoplastischen Polymeren bestehen, von denen eines durch ein Lösungsmittel entfernt werden kann, während das andere unlöslich in dem Lösungsmittel ist. Als unlösliches Polymer wird Polypropylen eingesetzt während das lösliche Polymer, das mit dem Lösemittel entfernt werden kann, Polyvinyl-Alkohol ist . Als Lösungsmittel wird Wasser eingesetzt. Dabei kann die Entfernung des löslichen Polymers vor, während oder nach der Herstellung eines gewebten oder nichtgewebten Materials erfolgen. Von Nachteil bei diesem Verfahren ist, dass beim Meit-Blown-Verfahren endliche Fasern entstehen, welche nicht dieselbe Festigkeit wie endlose Filamente aufweisen.

### Darstellung der Erfindung

Der Erfindung liegt die Aufgabe zugrunde ein Verfahren zur Herstellung von Monokomponenten-Mikrofilamenten aus von im Schmelzspinnverfahren erzeugten Mehrkomponenten-Filamenten zu schaffen, das einfach in seiner Durchführung ist und eine hohe Wirtschaftlichkeit hat.

Die Lösung der gestellten Aufgabe wird mit den Merkmalen des Anspruchs 1 erreicht. Bei dem Verfahren wird die aus einem niedrigschmelzenden Polymer bestehende Komponente durch Wärmebehandlung mit einem Schmelzfluid aus den Mehrkomponenten-Filamenten herausgelöst. Die im Verfahren verwendete hochschmelzende, wasserunlösliche Komponente kann ein Polyester, Polamid, Polyolefin, Polypropylen oder deren Copolymerisat sein und zwar in Abhängigkeit von dem später aus den Mikrofilamenten hergestellten Material.

Als leicht schmelzbare Komponente werden niedrigschmelzende, schmelzspinnbare Polymere aus den Klassen der Polyolefine, Polyester, Polyamide oder Polyurethane oder deren Co-Polymere eingesetzt. Als Beispiel wurde ε-Caprolacton verwendet.

Es ist günstig, wenn die niedrig schmelzende Komponente einen Schmelzpunkt unterhalb von 110°C, vorzugsweise unterhalb vom 80 °C hat. Dieses erlaubt den Einsatz eines Schmelzfluids mit einer relativ niedrigen Temperatur, die jedoch mindestens 20°C oberhalb der Schmeizpunkttemperatur der niedrig schmelzenden Komponente liegen sollte.

Als Schmelzfluid kann Wasser ohne oder mit einem Siedepunkterhöhungsmittel eingesetzt werden.

Der Schmelzvorgang erfolgt bei Vliesen bevorzugt nach der mechanisierten oder hydromechanischen Verfestigung. Eine hohe Wirtschaftlichkeit wird dann erzielt, wenn die niedrig schmelzende Komponente aus dem Schmelzfluid zurückgewonnen wird. Diese Rückgewinnung erfolgt durch Abkühlen des Schmelzfluids, Rekristallisieren, Separieren, Trocknen und Regranulieren. Dieser Vorgang kann mehrfach, bei Poly-ε-Caprolacton zum Beispiel bis zu 10 mal wiederholt werden. Ein nicht mehr einsatzfähiges Polys -Caprolacton kann der Denitrifikation zugeführt werden.

Die Konfiguration der Mehrkomponenten-Filamente im Querschnitt gesehen wird bevorzugt so gewählt, dass die durch den Schmelzvorgang entstehenden Mikrofilamente von außen dem Schmelzfluid zugänglich sind.

Aus den auf die oben beschriebene Weise hergestellten Mikrofilamenten kann ein Vlies, Gewebe oder Gewirke hergestellt sein, aus dem durch heißhydromechanische Behandlung die niedrig schmelzende Komponente der Filamente herausgeschmolzen wird. Besonders günstig wirkt sich dies bei der Herstellung eines Vliesstoffes aus, da das Vlies durch eine Fluidstrahlverwendung verfestigt werden kann.

Anhand eines Ausführungsbeispiels wird die Durchführung des Verfahrens beschrieben:

Es wird ein PIE-Filament mit 16 alternierenden Segmenten aus 70 % PET und 30 % PCL gesponnen und zu einem Vlies abgelegt und (hydro)mechanisch verfestigt.

Die Flächenware wird von oben mit überhitztem Wasserdampf beaufschlagt, der das Vlies durchströmt, das PCL aufschmelzt und nach unten in ein Auffangbad mit Wasser bei Raumtemperatur mitreißt.

Augenblicklich wird das geschmolzene PCL wieder rekristallisiert, aufgefangen, getrocknet, und dem Prozess nach eventuellem Umformungsschritt (Regranulierung) oben dem Extruder wieder zugeführt. Übrig bleibt ein einkomponentiger Vliesstoff aus Mikrofilamenten, der aufgrund des freien Volumens, das vorher vom PCL eingenommen war, von niedriger Dichte und guter Drapierfähigkeit ist.

## Patentansprüche

1. Verfahren zur Herstellung von Monokomponenten-Mikrofilamenten aus von im Schmelzspinnverfahren erzeugten Mehrkomponenten-Filamenten, **dadurch gekennzeichnet, dass** eine der Komponenten aus einem niedrigschmelzenden, schmelzspinnbarem Polymer besteht, das durch Wärmebehandlung mit einem Schmelzfluid aus den Mehrkomponenten-Filamenten herausgeschmolzen wird, wobei ein Schmelzfluid eingesetzt wird, dessen Temperatur mindestens 20°C oberhalb der Schmelztemperatur der herausschmelzenden Komponente liegt.

2. Verfahren zur Herstellung von Monokomponenten-Mikrofilamenten nach Anspruch 1, **dadurch gekennzeichnet, dass** die herausgeschmolzene Komponente einen Schmelzpunkt von unter 1 10°C, vorzugsweise von unter 80°C hat.

3. Verfahren zur Herstellung von Monokomponenten-Mikroflamenten nach Anspruch 1 oder 2, **dadurch gekennzeichnet, dass** die herausgeschmolzene Komponente ein Poly-ε-Caprolacton ist.

4. Verfahren zur Herstellung von Monokomponenten-Mikroflamenten nach einem der Ansprüche 1 bis 3, **dadurch gekennzeichnet, dass** als Schmelzfluid Wasser ohne oder mit einem Mittel zur Siedepunkterhöhung eingesetzt wird.

5. Verfahren zur Herstellung von Monokomponenten-Mikrofilamenten nach einem der Ansprüche 1 bis 4, **dadurch gekennzeichnet, dass** ein Siedepunkterhöhungsmittel dem Wasser beigegeben ist.

6. Verfahren zur Herstellung von Monokomponenten-Mikrofilamenten nach einem der Ansprüche 1 bis 5, **dadurch gekennzeichnet, dass** die herausgeschmolzene Komponente aus dem Schmelzfluid zurückgewonnen wird.

7. Verfahren zur Herstellung von Monokomponenten-Mikrofilamenten nach Anspruch 6, **dadurch gekennzeichnet, dass** die Rückgewinnung der herausgeschmolzenen Komponente durch Abkühlen des Schmelzfluids, Rekristallisieren, Separieren und eventuell Regranulieren erfolgt.

8. Verfahren zur Herstellung von Monokomponenten-Mikrofilamenten nach Anspruch 1, **dadurch gekennzeichnet, dass** die nicht herausgeschmolzene Komponente ein Polyester, Polyamid, Polyolefin, Polyurethan oder deren Copolimerisat ist.

9. Verfahren zur Herstellung von Monokomponenten-Mikrofilamenten nach einem der Ansprüche 1 bis 8, **dadurch gekennzeichnet, dass** der Schmelzvorgang nach der (hydro)mechanischen Verfestigung eines Vlieses erfolgt.

## Claims

1. Process for producing monocomponent microfilaments from meltspun multicomponent filaments, **characterized in that** one of the components consists of a low-melting, melt-spinnable polymer which is melted out of the multicomponent filaments by heat treatment with a melt fluid whose temperature is at least 20°C above the melting temperature of the component melting out.

2. Process for producing monocomponent microfilaments according to Claim 1, **characterized in that** the component melted out has a melting point of below 110°C, preferably of below 80°C.

3. Process for producing monocomponent microfilaments according to Claim 1 or 2, **characterized in that** the component melted out is poly-ε-caprolactone.

4. Process for producing monocomponent microfilaments according to any one of Claims 1 to 3, **characterized in that** water with or without a boiling point elevator is used as melt fluid.

5. Process for producing monocomponent microfilaments according to any one of Claims 1 to 4, **characterized in that** a boiling point elevator is admixed to the water.

6. Process for producing monocomponent microfilaments according to any one of Claims 1 to 5, **characterized in that** the component melted out is recovered from the melt fluid.

7. Process for producing monocomponent microfilaments according to Claim 6, **characterized in that** the recovery of the component melted out is effected by cooling the melt fluid, recrystallizing, separating and possibly regranulating.

8. Process for producing monocomponent microfilaments according to Claim 1, **characterized in that** the component not melted out is a polyester, polyamide, polyolefin, polyurethane or addition copolymer thereof.

9. Process for producing monocomponent microfilaments according to any one of Claims 1 to 8, **characterized in that** the melting step takes place after the (hydro)mechanical consolidation of a fibrous nonwoven web.

## Revendications

1. Procédé de fabrication de microfilaments monocomposants à partir de filaments multicomposants fabriqués par procédé de filage par fusion, **caractérisé en ce qu'**un des composants est composé d'un polymère filable par fusion à bas point de fusion qui est obtenu par fusion par traitement thermique avec un fluide de fusion à partir des filaments multicomposants, un fluide de fusion dont la température se situe au moins 20° C au, dessus de la température de fusion des composants fondus étant utilisé.

2. Procédé de fabrication de microfilaments monocomposants selon la revendication 1, **caractérisé en ce que** le composant obtenu par fusion a un point de fusion inférieur à 110° C, de préférence inférieur à 80° C.

3. Procédé de fabrication de microfilaments monocomposants selon la revendication 1 ou 2, **caractérisé en ce que** le composant obtenu par fusion est une poly-ε-caprolactonc.

4. Procédé de fabrication de microfilaments monocomposants selon l'une quelconque des revendications 1 à 3, **caractérisé en ce qu'**on utilise comme fluide de fusion de l'eau avec ou sans moyen permettant d'accroître le point d'ébullition.

5. Procédé de fabrication de microfilaments monocomposants selon l'une quelconque des revendications 1 à 4, **caractérisé en ce qu'**un moyen permettant d'accroître le point d'ébullition est ajouté à l'eau.

6. Procédé de fabrication de microfilaments monocomposants selon l'une quelconque des revendications 1 à 5, **caractérisé en ce que** le composant obtenu par fusion est récupéré du fluide de fusion,

7. Procédé de fabrication de microfilaments monocomposants selon la revendication 6, **caractérisé en ce que** la récupération du composant obtenu par fusion se fait en refroidissant le fluide de fusion, en le recristallisant, en le séparant et éventuellement en le regranulant.

8. Procédé de fabrication de microfilaments monocomposants selon la revendication 1, **caractérisé en ce que** le composant non obtenu par fusion est un polyester, un polyamide, une polyoléfine, un polyuréthane ou leurs copolymérisats.

9. Procédé de fabrication de microfilaments monocomposants selon l'une quelconque des revendications 1 à 8, **caractérisé en ce que** le processus de fusion a lieu après la consolidation (hydro)mécanique d'une nappe.
